(19) Europäisches Patentamt
European Patent Office
Office européen des brevets

(11) Veröffentlichungsnummer: **0 153 375 B1**

(12) # EUROPÄISCHE PATENTSCHRIFT veröffentlicht nach Art. 158 Abs. 3 EPÜ

(45) Veröffentlichungstag der Patentschrift: **13.03.91**

(21) Anmeldenummer: **84903165.3**

(22) Anmeldetag: **17.08.84**

(86) Internationale Anmeldenummer: **PCT/DE84/00169**

(87) Internationale Veröffentlichungsnummer: **WO 85/00820 (28.02.85 85/05)**

Teilanmeldung 90114969.0 eingereicht am 17/08/84.

(51) Int. Cl.⁵: **C08F 10/14**, C09D 123/18, C09D 163/10, D21H 19/16, C09J 7/02, C08F 283/12, B05D 5/08, D06M 15/19, D06M 15/37

(54) **HYDROPHOBE UND/ODER ABHÄSIVE MASSE, REAKTIVE VERDÜNNER, WEICHMACHER UND DEREN VERWENDUNG.**

(30) Priorität: **18.08.83 DE 3329877**

(43) Veröffentlichungstag der Anmeldung: **04.09.85 Patentblatt 85/36**

(45) Bekanntmachung des Hinweises auf die Patenterteilung: **13.03.91 Patentblatt 91/11**

(84) Benannte Vertragsstaaten: **AT BE CH DE FR GB LI LU NL SE**

(56) Entgegenhaltungen:
**EP-A- 0 006 705**
**FR-A- 1 345 108**
**GB-A- 1 347 954**
**US-A- 3 249 581**
**US-A- 4 250 300**
**DE-B- 2 917 779**
**FR-A- 2 396 782**
**US-A- 2 340 109**
**US-A- 4 154 714**

(73) Patentinhaber: **HINTERWALDNER, Rudolf**
**Kastanienstrasse 13**
**W-8000 München 90(DE)**

(72) Erfinder: **HINTERWALDNER, Rudolf**
**Kastanienstrasse 13**
**W-8000 München 90(DE)**

(74) Vertreter: **TER MEER - MÜLLER - STEINMEISTER & PARTNER**
**Mauerkircherstrasse 45**
**W-8000 München 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 153 375 B1

## Beschreibung

Gegenstgand der Erfindung ist die Verwendung einer hydrophoben und/oder abhäsiven Masse auf anorganischer, metallorganischer und/oder organischer Grundlage zum hydrophoben und/oder abhäsiven Ausrüsten von anorganischen, metallorganischen und/oder organischen Stoffen, zur Herstellung von bahnförmigem, flächigem hydrophobem und/oder abhäsivem Film- und Folienmaterial, als Verdünnungsmittel und/oder Weichmachungsmittel in metallorganischen und/oder organischen Massen sowie zur Ausbildung einer inerten Schutzhicht bei radikalischen, strahlen- und photochemischen Härtungs- und Vernetzungsreaktionen.

In der Technik spielen hydrophob und/oder abhäsiv ausgerüstete Oberflächen eine bedeutsame Rolle. Mit der hydrophoben und damit der wasserabstoßenden Ausrüstung möchte man die Oberflachen wirksam gegen Wasser und jede Art von Korrosion schützen. In manchen Anwendungsfällen wird zusätzlich neben einer ausreichenden Hydrophobie noch eine volle Atmungsaktivität des Werkstoffes bzw. Substrates gefordert. Mit der abhäsiven Ausrüstung dagegen will man Oberflächeneigenschaften erzielen, die das Anhaften adhäsiver Stoffe verhindern und deren rückstandsfreie Entfernung ermöglichen. Sie haben insbesondere als Trennbeschichtungen für Trennsubstrate in der Klebefolien- und Klebebandherstellung eine besondere Bedeutung erlangt.

Zur hydrophoben und/oder abhäsiven Ausrüstung von Oberflächen sind in der Literatur eine Vielzahl von Stoffen beschrieben worden, die diese Funktion in unterschiedlichem Maße erfüllen und vielfach zusätzlich werkstoffabhängig sind. Als hydrophobe und partiell auch abhäsive Stoffe werden nach dem heutigen Stand der Technik unter anderem fettartige Substanzen. wie beispielsweise Paraffin, Wachs, Metallseifen; Aluminiumverbindungen, wie beispielsweise Aluminiumsulfat, Aluminiumacetat und Aluminiumformiat: hochmolekulare Alkylpyridiniumverbindungen, Alkylisocyanate, substituierte Ethylenharnstoffe; komplexe Chromverbindungen und Silicone eingesetzt. Sie müssen überwiegend in inerten Lösungsmitteln gelöst werden, damit sie applizierbar sind. Diese Lösungsmittel verdampfen nach der Verarbeitung und stellen eine Umweltbeeinträchtigung dar. Bei der abhäsiven Ausrüstung von Oberflächen werden die fettartigen Substanzen wie beispielsweise Paraffin, Wachs und Metallseifen, weitgehend durch die teureren Silicontrennmittel ersetzt, weil ihre Trenneigenschaften nicht mehr den hohen technischen Anforderungen entsprechen.

Trotz einiger guter Eigenschaften befriedigen die neueren hydrophoben und/oder abhäsiven Stoffe auf der Grundlage von Polyorganosiloxanen nicht, was unter anderem darauf zurückzuführen ist, daß sie vielfach noch als lösungsmittelhaltige Produkte verarbeitet werden müssen, was eine entsprechende Umweltbelastung nach sich zieht bzw. kostspielige Rückgewinnungsverfahren erforderlich macht, und benötigen oftmals hohe Vernetzungs- und Härtungstemperaturen. Da diese Silikone um ein Vielfaches teurer sind als die oben erwähnten konventionellen Stoffe, lassen sie sich aus Wirtschaftlichkeitsgründen nicht immer in den notwendigen Gehalten einsetzen, um die geforderte Hydrophobie und/oder Abhäsion zu erreichen.

Mit hydrophoben und/oder abhäsiven Produkten, die bei höheren Temperaturen vernetzt oder gehärtet werden müssen, können thermisch sensible Werkstoffe und Substrate nicht ausgerüstet werden, da sie durch diese Wärmebelastung ihre ursprüngliche Form und ihren Aggregatszustand verändern können. Bei feuchtigkeitshaltigen Werkstoffen und Substraten, wie beispielsweise cellulosehaltigen Materialien und flächigen Papierbahnen ist zwar eine kurzfristige thermische Belastung möglich, jedoch muß anschließend eine Wiederbefeuchtung mit Wasserdampfaerosolen durchgeführt werden, um die ursprünglichen Eigenschaften, wie beispielsweise die Planlage, annähernd wieder einzustellen. Diese Wiederbefeuchtungstechnologie ist nicht nur kostspielig und energieaufwendig sondern fachlich auch sehr umstritten.

Die Funktionalität. auf der die Hydrophobie und Abhäsion unter anderem beruht, ist in der Literatur ausführlich beschrieben. Entscheidend dabei ist nicht allein die Unpolarität in der Kettenverzweigung pro Moleküleinheit, sondern zusätzlich auch ein möglichst hoher Gehalt an unpolaren Methylgruppen. Gerade dieser Gehalt an unpolaren Methylgruppen ist ausschlaggebend für den Grad der Hydrophobie und die Abhäsion einer Masse. Die Funktionalität der Hydrophobie und Abhäsion läßt sich unter anderem schematisch durch den sogenannten "Bürsteneffekt" an einer Dimethylsilikonverbindung darstellen:

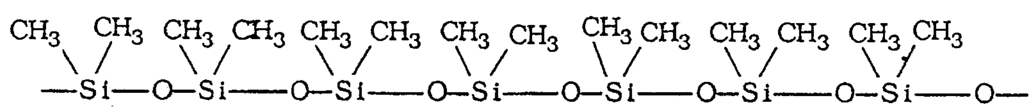

Anhand dieser schematischen Darstellung wird dem Fachmann aber auch deutlich, daß infolge der

vorgegebenen Atomgruppierung in Polydimethylsiloxanen der Gehalt an den entscheidenden Methylgruppen der Kettenverzweigung pro Si-O-Einheit auf 2,0 Mol beschränkt ist.

Es hat nun nicht an Bemühungen gefehlt. die Kosten bei der hydrophoben und/oder abhäsiven Ausrüstung von Oberflächen durch bessere wirtschaftlichere Lösungen zu senken. Diese Aufgabe scheitert jedoch vor allem daran, daß einerseits der Methylgruppengehalt an der Kettenverzweigung einer Verbindung nicht ohne weitres erhöht werden konnte und andererseits solche methylgruppenreicheren Stoffe nicht allgemein wirtschaflich zugänglich waren.

Bei der abhäsiven Ausrüstung von Trennpapieren und Trennfolien. die zur Abdeckung von selbstklebenden Materialien eingesetzt werden, besteht schon lange die Forderung nach graduell abgestuften Trenneigenschaften. Diese graduelle Abstufung scheiterte unter anderem bislang daran, daß einerseits der unpolare Methylgruppengehalt in einer Verbindung nicht auf technisch wirtschaftliche Weise erhöht und andererseits keine gleichmäßige statistische Methylgruppenverteilung im Molekül erzielt werden konnte.

Beim freiradikalischen Polymerisieren, Härten bzw. Vernetzen von ungesättigten Verbindungen, wie Polyester-, Acryl- und Methacrylharzen, inhibiert der molekulare Luftsauerstoff die Reaktionen an den Oberflächen. Der Luftsauerstoff macht dabei die Radikale unwirksam, wodurch die Härtungsreaktion unterbunden wird und die Oberfläche klebrig bleibt. Man hat versucht, die Oberfläche durch Abdecken mit Folien, Glasplatten und dergleichen vor dem Luftsauerstoffzu schützen. Da dies für den praktischen Einsatz. jedoch viel zu umständlich ist, wurde ein Paraffinzusatz (DE-PS 948 818) vorgeschlagen. Das Paraffin schwimmt während der Härtung an die Oberfläche auf und bildet dort eine Schutzschicht gegenüber dem Luftsauerstoff. Aus dem Paraffinzusatz erwächst jedoch manches Problem, so zum Beispiel jenes, daß Paraffin in den härtbaren Massen bei niedrigen Temperaturen auskristallisiert und bei hohen Temperaturen nicht mehr ausgeschieden wird. Ebenfalls aus den Eigenschaften des Paraffins erklärt sich, daß eine Härtung paraffinhaltiger Massen bei zu hohen Temperaturen nicht möglich ist. Somit lassen sich mit paraffinhaltigen härtbaren Massen keine kurzen Reaktionszeiten bei erhöhter Temperatur erreichen, weil man erst dann erwärmen darf, wenn das Paraffin vollständig aufgeschwommen ist. Da aber paraffinhaltige härtbare Massen ausgezeichnet schleifbar sind, wartet die Industrie schon lange auf verbesserte Lösungen.

Die DE-B-2 917 779 beschreibt ein Verfahren zur Herstellung von 2,3-Dimethylbuten-2, d.h. einer Verbindung, wie sie erfindungsgemäß auch als monomere Verbindung eingesetzt werden kann. Die Druckschrift offenbart aber lediglich die Eignung dieser Verbindung als wichtiges Zwischenprodukt für organische Synthesen.

Die FR-A-1345 108 offenbart ein Beschichtungsmaterial für weiche Oberflächen, welches Butylkautschuk enthält, d.h. ein Copolymer aus Isobutylen und Isopren. Daher enthalten diese Materialien lediglich 2 Methylgruppen pro Monomereinheit.

Die FR-A-2 396 782 beschreibt eine Formmasse, welche Poly-4-methylpenten-1 und ein Olefinoligomer enthält, welches ein Oligomeres auf der Grundlage einer Mischung von Butenisomeren ist.

Die GB-A-1 347 954 befaßt sich mit der Epoxidierung von Olefinen, bei der Epoxide erhalten werden, die als Weichmacher und Stabilisatoren für Kunststoffe beschrieben werden.

Die US-A-4 250 300, beschreibt Copolymere mit hydrophoben und/oder abhäsiven Eigenschaften, die sich von den erfindungsgemäß eingesetzten Polymeren aber dadurch unterscheiden, daß sie auf der Grundlage von fluorhaltigen Polyestern aufgebaut sind.

Die Aufgabe der vorliegenden Erfindung besteht nun darin, bestimmte Massen anzugeben, die zum hydrophoben und/oder abhäsiven Ausrüsten von anorganischen, metallorganischen und/oder organischen Stoffen, zur Herstellung von bahnförmigem, flächigem hydrophobem und/oder abhäsivem Film- und Folienmaterial, als Verdünnungsmittel und/oder Weichmachungsmittel in metallorganischen und/oder organischen Massen sowie zur Ausbildung einer inerten Schutzschicht bei radikalischen, strahlen- und photochemischen Härtungs- und Vernetzungsreaktionen geeignet sind und bessere Eigenschaften und bei größerer Wirtschaftlichkeit ergeben. Gleichzeitig sollen die oben angesprochenen Nachteile überwunden werden.

Es hat sich nun überraschenderweise gezeigt, daß methylgruppenreiche Monomere der allgemeinen Formel I

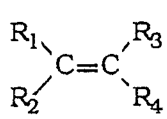

(I)

worin $R_1$, $R_2$, $R_3$ und $R_4$ Wasserstoffatome, Methyl- und/oder Ethylgruppen bedeuten, die bei spezifischen Fraktionsschnitten in der petrochemischen Aufbereitung von Erdöl anfallen, sich als solche oder auch in Form ihrer Oligomeren oder Polymeren oder der daraus gebildeten Epoxide hervorragend zum hydrophoben und/oder abhäsiven Ausrüsten von Oberflächen eignen.

Diese methylgruppenreichen Monomere der obigen allgemeinen Formel I bestehen überwiegend aus Gemischen der folgenden Olefintypen:

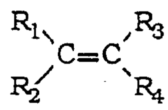

Typ 1

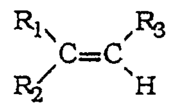

Typ 2

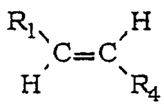

Typ 3

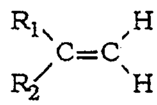

Typ 4

worin $R_1$, $R_2$, $R_3$ und $R_4$ die oben angegebenen Bedeutungen besitzen. Die Gehalte an den Verbindungen der Typen 1 und 2 machen zusammen mindestens 40% aus. Durch fraktionierte Trennungs- bzw. Destillationsverfahren lassen sich gegebenenfalls die einzelnen Olefintypen mit einem relativ hohen Reinheitsgrad wirtschaftlich gewinnen.

Diese Monomeren des Typs 1 und 2 besitzen in der Kettenverzweigung 3,0 bis 4,0 Methylgruppen pro Molekül und lassen sich infolge der C = C-Doppelbindung polymerisieren, ethoxylieren und weiterhin mit einer Vielzahl von funktionellen Gruppen umsetzen bzw. umwandeln.

Gegenstand der Erfindung ist daher die Verwendung einer hydrophoben und/oder abhäsiven Masse auf anorganischer, metallorganischer und/oder organischer Grundlage mit einem Gehalt von 0,1 bis 99,9 Gew.-%, bezogen auf die Masse an einer monomeren, oligomeren und/oder polymeren methylgruppenreichen Kohlenwasserstoffverbindung und/oder deren Derivaten der allgemeinen Formeln I, II und/oder III

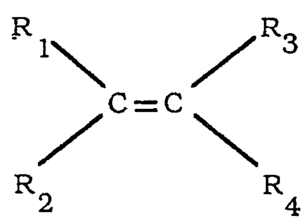

(I)

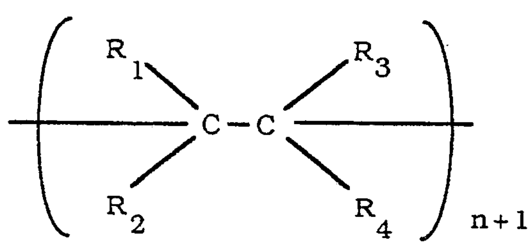

(II)

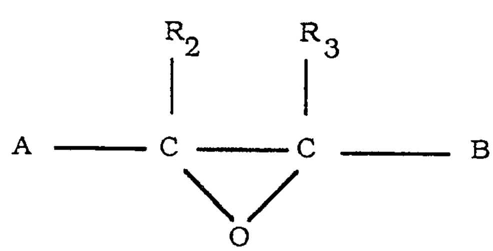

(III)

worin

$R_1$, $R_2$, $R_3$ und $R_4$ Wasserstoffatome, $CH_3$-Gruppen und/oder $C_2H_5$-Gruppen,
A und B Wasserstoffatome, $CH_3$-Gruppen und/oder $C_2H_5$-Gruppen
und/oder Reste der allgemeinen Formel (II) und
n eine ganze Zahl mit einem Wert zwischen 0 und 20.000.000
mit der Maßgabe bedeuten, daß der Methylgruppengehalt mindestens 3,0
bis 4,0 pro Monomer oder Monomereinheit beträgt, zum hydrophoben und/oder abhäsiven Ausrüsten von anorganischen, metallorganischen und/oder organischen Stoffen, zur Herstellung von bahnförmigem. flächigem hydrophobem und/oder abhäsivem Film- und Folienmaterial, als Verdünnungsmittel und/oder Weichmachungsmittel in metallorganischen und/oder orgenischen Massen sowie zur Ausbildung einer inerten Schutzschicht bei radikalischen, strahlen- und photochemischen Härtungs- und Vernetzungsreaktionen.

Die erfindungsgemäß eingesetzten Verbindungen der allgemeinen Formel I sind aliphatische Verbindungen mit einer ungesättigten Doppelbindung und einem Methylgruppengehalt von mindestens 3,0 bis 4,0 pro Molekül. Vertreter dieser Gruppe sind 3-Methylbuten-2; 2,3-Dimethylbuten-2, 2,3-Dimethylpenten-2.

Als Derivate der methylgruppenreichen Kohlenwasserstoffverbindungen der allgemeinen Formeln I, II und/oder III verwendet man mit Vorteil copolymere Derivate, welche durch Polymerisation mit Comonomeren mit mindestens einer reaktionsfähigen C-C-Doppelbindung und/oder C-C-Dreifachbindung, durch Polyaddition mit aktive Wasserstoffatome tragenden Verbindungen und/oder durch Polykondensation mit polykondensationsfähige Hydroxylgruppen tragenden Verbindungen, organischen Siliciumverbindungen und/oder anorganischen, hydraulisch abbindenden Verbindungen erhalten worden sind.

Werden die Verbindungen der allgemeinen Formel I nach bekannten Verfahren miteinander oder untereinander dimerisiert, oligomerisiert oder polymerisiert, so entstehen flüssige bis feste Produkte mit unterschiedlichen Molekulargewichten, jedoch definierbaren Gehalten an unpolaren Methylgruppen in der Kettenverzweigung. Die festen homopolymeren Olefinpolymerisate besitzen "wachsartige: Eigenschaften und weisen Schmelzpunkte auf, die in Abhängigkeit von dem Polymerisationsgrad im Bereich zwischen 40 und 250 °C liegen, und besitzen Molekulargewichte von bis zu $20 \times 10^6$.

Die erfindungsgemäß verwendeten methylgruppenreichen Oligomere oder Polymere der allgemeinen Formel II sind Alkene, Cycloalkene, Arylalkene, offenkettige und cyclische Polyene, sie werden nach bekannten Verfahren durch Dimerisation, Mischdimerisation, Oligomerisation, Mischoligomerisation, Polymerisation, Copolymerisation, Polykondensation und/oder Polyaddition mit mindestens einer der methylgruppenreichen Verbindungen der allgemeinen Formeln I und/oder III gewonnen. Die Dimerisation, Oligomerisation und/oder Polymerisation solcher Verbindungen sind in der Literatur ausfürlich beschrieben (u. a. Houben-Weyl, Band V/ 1a und 1b (1972)). Hieraus wird jedoch im Rahmen der vorliegenden Erfindung kein Schutz begehrt. So kann zum Beispiel die Oligomerisation und/oder Mischoligomerisation mit kationischen und anionischen Katalysatoren, Koordinationskatalysatoren, aber auch thermisch oder photochemisch erfolgen.

Bei den erfindungsgemäß verwendeten oligomeren oder polymeren Verbindungen der allgemeinen Formel II handelt es sich um ß-Olefine mit mindestens einer C=C-Doppelbindung. Zu den dimeren und oligomeren Verbindungen gehören u.a. beispielsweise folgende: 2,4,4-Trimethylpenten-2: 2,2,4,6,6-Pentamethylhepten-3; 2,3,4,4,5,5,6,6,7,7,8,8,9,9,10,10, 11-Heptadecanmethyldodecen-2; 2,4,4,6,6,8,8-Heptamethylnonen-2; 2,2,4,4,6,6,8,8,10-Nonamethylundecen-2; 2,3,4,4,5,5,6,7-Octamethyloctadien-2,7; die erfindungsgemäß verwendeten oligomeren Kohlenwasserstoffverbindungen können aber auch Gemische bzw. Mischoligomere sein. Sie besitzen im allgemeinen eine Kohlenstoffzahl zwischen 10 und .50 und ihre Flammpunkte sind > 100 °C. Die Kettenverzweigung beträgt 3,0 bis 4,0 Mol Methylgruppen pro monomerem Olefintyp gemäß Formel (I). Ein typischer Vertreter dieser Gruppe ist u.a. nachstehender mit folgenden chemischen und physikalischen Daten:

| | | |
|---|---|---|
| Olefintypen: | 2,3-Dimethylbuten-2 | Anteil ca. 30 - 40% |
| | 3-Methylbuten-2 | Anteil ca. 40 - 50% |
| | Buten-2 | Anteil ca. 10 - 20% |
| | 2-Methylpropen- 1 | Anteil ca. 1 - 10% |
| C-Zahl: | $C_{14}$ - $C_{20}$ | |
| Kettenverzweigung: | 3,5 bis 4 Methylgruppen/Molekül | |
| Siedeverlauf (DIN 51751): | 255°C Siedebeginn | |
| | 259°C 10% | |
| | 263°C 50% | |
| | 264°C 70% | |
| | 268°C 90% | |
| | 270°C 95% | |
| | 279°C Siedeende | |

die Viskosität beträgt bei 50 °C ca. 3,5 $mm^2/s$ und der Flammpunkt liegt bei > 110 °C. Diese Verbindung enthält mindestens eine C-C-Doppelbindung.

Die erfindungsgemäß eingesetzten monomeren Olefintypen können mit anderen Comonomeren, d.h. Verbindungen, die unabhängig von ihrem Molekulargewicht polymerisierbar sind, dimertsiert, oligomerisiert und mit unterschiedlichen Polymerisationsgraden polymerisiert werden. Die Herstellung dieser erfindungsgemäß verwendeten dimeren, oligomeren und/oder polymeren Homo- und/oder Copolymere erfolgt jeweils nach den bekannten und geeigneten Polymerisations-, Polykondensatiions- und/oder Polyadditionsverfahren. Dasselbe gilt für die Umwandlung solcher Verbindungen mit funktionellen Gruppen, beispielsweise über Additionsreaktionen, die in der Literatur hinreichend beschrieben sind (siehe Houben-Weyl, Band V/ 1b 1972). Die Dimerisation, Oligomerisation und Polemerisation der erfindungsgemäß eingesetzten Verbindungen der allgemeinen Verbindungen der Formel I mit anderen Comonomeren kann dabei in der Weise durchgeführt werden, daß mindestens eine, vorzugsweise zwei und mehr C = C-Doppelbindung pro Molekül erhalten werden. Dies ist auch wiederum bedeutsam füh die Anzahl der pro Molekül einzuführenden Epoxidgruppen. Für diese Verfahren, wird jedoch im Rahmen der vorliegenden Erfindung kein Schutz begehrt.

Erfindungsgemäß verwendet werden können auch die dimeren, oligomeren und/oder polymeren Verbindungen, die einen Gehalt von mindestens einem Mol einer oder mehrerer der erfindungsgemäß eingesetzten Verbindungen der allgemeinen Formeln I bis III aufweisen. Über diesen Gehalt können nicht nur die Reaktivität einerseits und die Wirtschaftlichkeit andererseits, sondern auch die hydrophoben und/oder abhäsiven Eigenschaften der behandelten Oberfläche graduell beeinflußt werden.

Eine Sonderstellung nehmen die epoxidierten Verbindungen der allgemeinen Formel III ein. Durch die Einführung mindestens einer epoxyfunktionellen Gruppe lassen sich die erfindungsgemäß verwendeten Verbindungen der allgemeinen Formel I und II auch mit Verbindungen, die aktive Wasserstoffatome enthalten, wie beispielsweise Aminen, Iminen, Amiden, ein- und mehrbasischen Säuren und deren Anhydriden umsetzen und gegebenenfalls polyaddieren.

Im Mittelpunkt stehen dabei nicht nur die bekannten Härtungs- und Vernetzungsreaktionen mit Epoxiden, sondern auch die Einführung von weiteren ungesättigten Gruppen, wie beispielsweise C = C-Doppelbindungen. Besondere Bedeutung kommt unter anderem der Einführung von Acryl- und Methyacrylgruppierungen zu, weil damit neue Derivate entstehen, die besonders gute Reaktivitäten bei der frei radikalischen Polymerisation unter Verwendung von beispielsweise Peroxiden, aktiver Stahlung besitzen.

Die Epoxidierung der erfindungsgemäß verwendeten Verbindungen der allgemeinen Formeln I und II kann durch Oxidation mit Persäuren, wie Perbenzoesäure, aber auch durch Wasserstoffperoxid, tert.-Butylhydroperoxid erfolgen (siehe beispielsweise Houben-Weyl Band VI/3, 1965). Als Beispiele für Verbindungen der allgemeinen Formel III seien genannt: 2,3-Epoxy-2,3-dimethylbutan; 2,3;4,5-Diepoxy2,3,4,5-tetramethylhexan; 3,4-Epoxy-2,3,4-trimethylpentanal; 2,3;6,7-Diepoxy-2,3,4,5,6,7-hexamethylocten und 2,3;6,7-Diepoxy-2,3,4,4,5,5,6,7-octamethyloctan.

Ein weiteres Ziel der vorliegenden Erfindung ist die Verwendung der definierten Massen als Verdünner, Lösemittel und Weichmacher in anorganischen, metallorganischen und/oder organischen Massen.

Eine besondere Bedeutung kommt dabei erfindungsgemäß den reaktiven Kohlenwasserstofftypen und deren Derivaten zu. Sie können mit den monomeren und/oder oligomeren Kohlenwasserstoffen allein oder in Kombination mit anderen reaktiven Verdünnern und Lösemitteln u.a. ungesättigten Polyesterharzen, Acryl- und Methacrylverbindungen gelöst und verdünnt werden. Eine besondere Verträglichkeit besteht, wie überraschenderweise gefunden wurde, mit einer Vielzahl von Polyorganosiloxanen, wobei sie sowohl die Funktionen eines reaktiven Verdünners als auch die eines reaktiven Weichmachers übernehmen. Werden sie beim freiradikalischen Vernetzen und Härten von ungesättigten Verbingungen, wie z.B. ungesättigten Polyesterharzen, Acryl- und Methacrylverbindungen eingesetzt, so bilden die eriindungsgemäß eingesetzten Kohlenwasserstoffe und ihre Derivate an der Oberfläche eine inerte Schutzschicht aus, die das Inhibieren der Reaktion durch den Luftsauerstoff reduziert und verhindert. Gleichzeitig werden sie chemisch in die Endproduktmatrix eingebunden. Da die flüssigen monomeren, oligomeren und polymeren Typen nicht kristallisieren, treten -im Gegensatz zu Paraffinzusätzen- während der Lagerung keine Probleme auf. Auch bei einer Härtung solcher Massen bei erhöhten Temperaturen orientieren sich die erfindungsgemäß verwendeten methylgruppenreichen Verbindungen rasch zur Oberfläche und bilden dabei schnell einen inerten Schutzfilm.

Die erfindungsgemäß verwendeten Oligomere und/oder Polymere können chemisch inert sein oder aber noch reaktive funktionelle Gruppen besitzen. Welche dieser Verbindungen verwendet werden, hängt vorzugsweise von den Formulierungen, den Verarbeitungsbedingungen und den zusätzlich geforderten Endeigenschaften ab. Vorzugsweise wird man solche Verbindungen einsetzen, die noch funktionelle Gruppen tragen, weil sie über diese chemisch an die Matrix der auszurüstenden Oberfläche eingebunden werden.

Die erfindungsgemäß eingesetzten härtbaren Massen, die diese Verbindungen enthalten, können in flüssiger, pastöser, thixotroper oder halbfester Form vorliegen.

Als monomere, oligomere bzw. polymere anorganische Verbindungen eignen sich u.a. hydraulisch abbindende Massen, Zemente, wie z.B. Portland-Tonerdeschmelz-Zement, Gips, Anhydrit, Magnesit, Kalk, Silikate, wie z.B. Wasserglas und dergleichen.

Zu den metallorganischen und/oder organischen Comonomeren gehören alle die Verbindungen, die zur Polymerisation, Polykondensation und/oder Polyaddition mit den erfindungsgemäß benutzten methylgruppenreichen Kohlenwasserstoffen und deren Derivaten geeignet sind. Hierzu gehört auch die Pfropfpolymerisation. Die dabei überraschenderweise gefundene Polykondensation dürfte u.a. mit einer Allylumlagerung zu begründen sein.

Gemäß einer bevorzugten Ausführungsform der Erfindung enthält die zur Behandlung der auszurüstenden Oberfläche eingesetzte Masse neben den Verbindungen der allgemeinen Formeln I bis III

a) Comonomere mit mindestens einer reaktionsfähigen C-C-Doppelbindung und/oder -Dreifachbindung, insbesondere Alkene, Cycloalkene, Arylalkene, Polyene, Allene, Arene, Arine, und noch bevorzugter allyl-, vinyl-, acryl- und/oder methacryl-gruppenhaltige Verbindungen,

b) aktive Wasserstoffatome tragende Verbindungen, insbesondere Amine, Amide, Amidoamine, Imine, Imide, ein- oder mehrbasig gesättigte und/oder ungesättigte Säuren bzw. deren Anhydride und/oder Siliciumwasserstoffverbindungen,

c) polykondensationsfähige, Hydroxylgruppen tragende Verbindungen, d) organische Siliciumverbindungen, insbesondere Silane, Silanole, Organosiloxane und/oder Organooxysilane und/oder

e) anorganische, hydraulisch abbindende Verbindungen, insbesondere Zemente oder Silikate.

Zu den Comonomeren gehören alle Verbindungen, die zur Polymerisation, Polykondensation und/oder Polyaddition mit den erfindungsgemäß verwendeten Verbindungen der allgemeinen Formeln I bis II geeignet sind. Hierzu ist auch die Pfropfpolymerisation zu rechnen. Die dabei überraschenderweise auftretende Polykondensation dürfte unter anderem mit einer Allylumlagerung zu begründen sein.

Die Comonomeren für die radikalische, ionische, koordinative, strahlen- und photochemische Polymerisation mit den erfindungsgemäß verwendeten methylgruppenreichen Kohlenwasserstoffen und deren Derivaten können aus der Familie der ungesättigten Verbindungen ausgewählt werden. Hierzu eignen sich alle monomeren, oligomeren, polymeren und/oder copolymeren Verbindungen mit mindestens einer reaktionsfähigen C-C-Doppelbindung und/oder C-C-Dreifachbindung im Molekül, soweit sie mit den erfindungsgemäß verwendeten Verbindungen der allgemeinen Formeln I bis III umsetzbar sind.

Solche Verbindungen sind u.a. unverzweigte, verzweigte und/oder substituierte Alkene, Cycloalkene, Arylalkene, offenkettige und cyclische Polyene, Allene, Kumulene, Arene, Arine und dergleichen. Als Substituenten bzw. charakteristische Gruppen können Hydroxyl-, Carboxyl-, Halogen-, Nitril-, Cyanat-, Amin-, Amid-, Imin-, Imid-, Sulfonyl-, Aldehyd-, Keton-, Keten-, Urethan-, Epoxidgruppen vorliegen. Die Verbindungen können eine und/oder mehrere ungesättigte Gruppen enthalten. Vertreter dieser Gruppe sind u.a. Monomere, Oligomere und Polymere aus Ethylen, Propylen, Butylen, Isopren, Isobutylen, Butadien, Buten-(2)-diol-(1,4), Ethin, 3-Penten-1-in; Vinylacetat, Vinyllaurat, Crotonaldehyd, Vinylhalogenide, Vinylidenhalogenide; Styrol, $\alpha$-Methylstyrol, Acenaphthylen; Acryl- und Methacrylsäure und deren Ester, Säureamide; vinylacryl-, methacryl-und/oder allylgruppentragende Siloxane, Urethane und Epoxide; ein- und mehrfach ungesättigte Mono-, Di- und Polycarbonsäuren, deren Anhydride und Ester, wie z.B. Triallyltrimellitat; ungesättigte Polyesterharze, wie z.B. aus Maleinsäure und/oder Phthalsäure mit gesättigten und ungesättigten Glykolen.

Die Polymerisation der erfindungsgemäß verwendeten Verbindungen der allgemeinen Formeln I bis III mit den geeigneten Copolymeren erfolgt nach Auftragen der Masse auf die auszurüstende Oberfläche beim Härten der aufgebrachten Masse.

Für Pfropfreaktionen und/oder Quervernetzungen mit den erfindungsgemäß eingesetzten methylgruppenreichen Kohlenwasserstoffen und deren Derivaten kommen als Polymere alle durch Radikalbildner vernetzbaren und/oder pfropfbaren polymeren oder copolymeren Verbindungen mit $-CH_2-$ und/oder-CH-Gruppen, die auf synthetischem Wege erhalten wurden oder natürlicher Genese sind, sowie beliebige Mischungen derselben in Frage. Solche Verbindungen sind z.B. Hoch- und Niederdruckpolyethylen niederer und hoher Dichte, chloriertes und chlorsulfoniertes Polyethylen, Polypropylen, Polyvinylchlorid, Polyvinylacetat, Polyacrylsäureester, Ethylen-Vinylacetat-Copolymer, Ethylen-Propylen-Copolymer, Ethylen-Propylen-Butylen-Copolymer, Vinylchlorid-Vinylacetat-Copolymer, Vinylchlorid-Vinylidenchlorid-Copolymer, Polyisopren (Naturkautschuk), Polybutadien, Polychloropren, synthetisches Polyisopren, Ethylen-Propylen-Ethylidennorbornen, Butadien-Styrol-Copolymer, Butadien-Acrylnitril-Copolymer, Butadien-Styrol-Acrylnitril-Copolymer, Styrol-Isopren-Blockpolymer, Butylkautschuk, Silikonkautschuk, gesättigte Polyester, Polyamide, Polyurethane, Polyether, Polyacetate und dergleichen.

Als Comonomere für Polykondensations- und Polyadditionsreaktionen sind alle metallorganischen und/oder organischen Verbindungen geeignet, die zu solchen Reaktionen mit den erfindungsgemäßen Kohlenwasserstofftypen und deren Derivaten geeignet sind. Die zur Polykondensation befähigten Comonomere tragen u.a. Hydoxyl- und Halogengruppen. Hierzu gehören u.a. ein- und mehrwertige Alkohole, wie z.B. Glykole, Glycerin, Trimethylolpropan, Pentaerythrit: Mono-, Di- und Polycarbonsäuren und deren Anhydride, wie z.B.Abietinsäure, Phthalsäure, Trimellithsäure; aliphatische und aromatische Methylolverbindungen, wie z.B. Methylolphenole, Methylolharnstoffe. Zur Polyaddition sind besonders die metallorganischen und/oder organischen Verbindungen geeignet, die reaktive Wasserstoffatome besitzen. Hierzu gehören u.a. Amide, Amine, Isocyanate, gesättigte und ungesättigte ein- und mehrbasig Carbonsäuren und deren Anhydride und Aldehyde. Die Polyadditionsreaktionen mit Comonomeren unterscheiden sich zwischen den Verbindungen der Formel I und II von den Verbindungen der Formel III. Bei den Verbindungen der Formeln I und II verläuft die Addition entweder nach der Markownikoffschen Regel oder bei der radikalischen Addition, z.B. unter Einfluß von Strahlen oder Katalysatoren. wie Peroxide, entgegen dieser Regel (auch Anti-Markownikoff-Addition genannt). Bei den epoxidierten Verbindungen der Formel III erfolgt die Addition an der Epoxidgruppe.

Die Epoxidierung der erfindungsgemäß verwendeten Verbindungen der Formeln I und II kann durch Oxidation mit Persäuren, wie Perbenzoesäure, aber auch durch Wasserstoffperoxid und tert.Butylhydroperoxid erfolgen.

Eine besondere Stellung nimmt die Kombination von metallorganischen Verbindungen des Siliciums mit den erfindungsgemäß verwendeten Verbindungen ein. Mit ihnen lassen sich Additionsreaktionen mit solchen Verbindungen durchführen, die noch Wasserstoffatome am Silicium enthalten. Hierbei unterscheidet man Reaktionen, die nach einem Radikalmechanismus, wie z.B. Peroxide, Strahlen, oder nach einem Radikal-/"Ionen"-Mechanismus ablaufen, sowie edelmetallkatalysierte Reaktionen, bei welchen in der Regel keine freien Radikale auftreten. Aber auch Kondensationsreaktionen bzw. kondensationsvernetzenden Reaktionen sind die erfindungsgemäß verwendeten Kohlenwasserstofftypen und deren Derivate mit siliciumorganischen Verbindungen, wie überraschenderweise gefunden wurde, zugänglich.

Als Reaktionspartner eignen sich somit u.a. unverzwelgte, verzweigte und/oder cyclische Silane, Silanole, Polysilane, Polyorganosiloxane, Polysilazane, Polysilthian, Polysilalkenyle, Polysilarylene, Polysilalkensiloxane, Polysilarylensiloxane, Polysilalkylensilane, Polysilarylensilane mit mindestens einer silicium- und/oder organo-funktionellen Gruppe, wobei diese vorzugsweise

$$\geqslant SiH,\ \geqslant Si{-}OH,\ \geqslant Si{-}Halogen,\ \geqslant Si{-}SH,\ -CH=CH_2 \text{ und/oder } -O-CO-CR=CH_2$$

bedeuten,

worin Halogen für Chlor, Brom, Jod und/oder Fluor und R für H oder einen Alkylrest mit 1 bis 4 C-Atomen

stehen. Hierzu gehören gehören Silane, Silanole, Organosiloxane und Organooxysilane.

Bei viskosen siliciumorganischen Verbindungen können die erfindungsgemäß verwendeten Kohlenwasserstofftypen und deren Derivate zusätzlich die Funktion eines reaktiven Lösungsmittels, Verdünnungsmittels und/oder Weichmachers übernehmen, ohne dabei die guten hydrophoben und/oder abhäsiven Eigenschaften zu verändern. In Abhängigkeit der Ausgangsviskositäten, der funktionellen Gruppen und den erforderlichen Applikationskonzentrationen können die Verhältnisse von siliciumorganischen Verbindungen zu den erfindungsgemäß verwendeten Kohlenwasserstofftypen und deren Derivaten im Bereich von 99:1 bis 1 : 99 liegen, wobei sie neben der Funktion als Reaktionspartner zusätzlich die eines Weichmachers und/oder Verdünners übernehmen.

Auch inerte organische Verbindungen können mit den erfindungsgemäß eingesetzten Kohlenwasserstofftypen und deren Derivaten gelöst, verdünnt und/oder weichgemacht werden.

Zum Umsetzen der erfindungsgemäß verwendeten Verbindungen der allgemeinen Formeln I bis III eignen sich die bekannten Reaktionsinitiatoren für die verschiedenen Polymerisations-, Polykondensations-, Polyadditions-, Vulkanisations und/oder Pfropfpolymerisationssysteme, d.h. ganz allgemein reaktive Verbindungen, die Reaktionen initiieren können. Hierzu gehören neben den Comonomeren, u.a. Katalysatoren, wie Metallkomplexe, bekannte Initiatoren und Radikalbildner, wie Peroxide. Hydroperoxide, Persäuren, deren Derivate und Salze: Oxidationsmittel wie Bleidioxid, Mangandioxid: Harter, wie z.B. Polyamine, Polyamidamine; Isocyanate und deren Derivate: Mercaptane und Mercaptoverbindungen. Auch Reaktionsbeschleuniger, die u. a. leicht Elektronen abgeben und dadurch Aufgaben wie z.B. beschleunigter Peroxidzerfall, übernehmen können, zahlen hierzu. Dies sind u.a. Schwermetallverbindungen, Amine, Amide, Imine, Imide, Mercaptane und Azokörper.

Die Umsetzungsreaktionen und damit die Härtung können aber auch photochemisch mit Photoinitiatoren und ultravioletter Strahlung: mit ionisierenden Strahlen, wie Gamma-, Röntgen-, Elektronen-, Ionenstrahlen; Infrarot- bzw. emittierten Infrarot-Strahlen durchgeführt werden.

Die erfindungsgemäß auf die auszurüstenden Oberflächen aufgebrachten Massen lassen sich durch weitere Zusätze modifizieren. Geeignete Zusatzstoffe sind u.a. Weichmacher. Öle, Teere, Asphalte, Bitumina, Lösungsmittel, Farbstoffe, Pigmente, Thoixotropiermittel, anorganische und/oder organische Füllstoffe und Fasern, Netz- und Verlaufmittel. Ferner können ihnen Stabiiisatoren und/oder Inhibitoren zugesetzt werden.

Besondere Verarbeitungsformen sind bei den polymeren Massen Verdünner und/oder Weichnmacher gegeben, wenn sie im festen Aggregatzustand vorliegen. Diese lassen sich entweder aus ihren Lösungen, Dispersionen und/oder Suspensionen in inerten Lösungsmitteln einschließlich Wasser oder aus ihren Schmelzen verarbeiten. Die mittels Wärme plastifizierten und/oder geschmolzenen erfindungsgemäß Polymere können mit bekannten Verfahren mittels Spritzen, Pressen, Gießen, Kalandrieren und/oder Extrudieren verarbeitet werden. Mit Hilfe dieser Technologien lassen sich geformte Gegenstände, Filme, Folien, Profile und/oder Schläuche herstellen.

Ein weiteres Ziel der vorliegenden Erfindung ist die Verwendung der erfindungsgemäß eingesetzten hydrophoben und/oder abhäsiven Massen, Verdünner und/oder Weichmacher in vielen Bereichen der Technik, der gewerblichen Wirtschaft, des Handwerks und der Heimwerker.

So lassen sich mit den erfindungsgemäß verwendeten Kohlenwasserstoffverbindungen und den damit hergestellten Derivaten in den hydrophoben und/oder abhäsiven Eigenschaften verbesserte Überzugs-, Beschichtungs-, Anstrich-, Imprägnier- und/oder Trennmittel herstellen. Durch die Modifikation bestehender Erzeugnisse mit den erfindungsgemäßen verwendeten lassen sich auch deren hydrophobe und/oder abhäsive Eigenschaften wesentlich verbessern. Weitere erfinderische Merkmale sind, daß die erfindungsgemäßen verwendeten Kohlenwasserstoffverbindungen und die damit hergestellten Derivate außerordentlich wirtschaftlich und umweltfreundlich sind.

Werden sie aber nur als reaktive Verdünner und/oder Weichmacher in reaktiven Eintopf und Mehrtopfsystemen eingesetzt, bieten die erfindungsgemäß eingesetzten Kohlenwasserstoffverbindungen und ihre Derivate durch ihre höheren Siedepunkte und Flammpunkte besondere Vorteile und sind gleichzeitig wirtschaftlicher und umweltfreundlicher. So können sie in einer Vielzahl - nach dem heutigen Stand der Technik- von Überzugs-, Beschichtungs-,Anstrich-, Imprägnier-und/oder Trennmitteln die inerten oder reaktiven, brenn- und/ oder unbrennbaren Lösungsmittel substituieren, wodurch diese ebenfalls wirtschaftlicher, umweltfreundlicher und gleichzeitig in ihren hydrophoben und/oder abhäsiven Eigenschaften verbessert werden.

Eine weitere besondere Anwendungsform der erfindungsgemäß verwendeten Kohlenwasserstoffverbindungen und deren Derivaten ist der Einsatz in additions-und kondensationsvernetzenden Polydimethylsiloxan-Systemen, die als Hydrophobier- und Trennmittel in vielen Bereichen der Technik eingesetzt werden. Diese Hydrophobier- und Trennmittel müssen vielfach mit hohen Anteilen an inerten

Lösungsmitteln, wie z.B. Testbenzin- Toluol, Xylol, Chlorkohlenwasserstoff, verdünnt werden, damit sie applizierbar werden.

Sie können aber auch als reaktive Weichmacher in Polysiloxansystemen eingesetzt werden. Beim Einsatz in polysiloxanhaltigen Dichtstoffen wird u.a., wie überraschenderweise gefunden wurde, die Überstreichbarkeit mit Anstrichmitteln erheblich verbessert.

Diese inerten Lösungsmittel als Verarbeitungshilfen können nun gänzlich durch einen oder mehrere niedermolekulare, reaktive Verdünner, gemäß vorliegender Erfindung, substituiert werden. Da sich der Verdünner mit seinem hohen Gehalt an Methylengruppen pro Molekül in die vernetzte Matrix einbaut, werden gleichzeitig die hydrophoben und/oder abhäsiven Eigenschaften merklich verbessert.

Beim Einsatz als Trennmittel beim Beschichten von flächigen Substratbahnen aus Papier, Kunststoffen, Textilien und Metallen zur abhäsiven Ausrüstung ist eine weitere besondere Anwendungsform der Erfindung gegeben. Als Reaktionspartner mit den additions- und kondensationsvernetzenden Polydimethylsiloxanen können die erfindungsgemäß verwendeten Kohlenwasserstoffe und deren Derivate nicht nur die Funktion eines Verdünners übernehmen, sondern auch über deren Gehalt an Methylgruppen lassen sich die abhäsiven Eigenschaften - gemessen als Trennkraft gegenüber Klebrigen Massen - graduell einstellen. Da sie als Reaktionspartner gleichzeitig ein Lieferant der unpolaren Methylgruppen sind, können sogar hohe Anteile an den Polydimethylsiloxanen substituiert und zusätzlich die abhäsiven Eigenschaften verbessert werden. Durch die Elimination der inerten Lösungsmittel durch die erfindungsgemaß verwendeten reaktiven Verdünner werden diese Trennmittelsysteme nicht nur wirtschaftlicher und umweltfreundlicher, sondern sie können auch bei niederen Temperaturen, z.B. unter 100°C vernetzt werden. Dadurch werden auch thermosensible Kunststoffbahnen mit den erfindungsgemäß verwendeten abhäsiven Mitteln ausrüstbar. Insgesamt läßt sich dadurch auch die Beschichtungstechnologie günstiger gestalten, weil die Entsorgungsprobleme stark reduziert werden.

Beim freiradikalischen und strahlenchemischen Härten und Vernetzen von ungesättigten Verbindungen, wie z.B. ungesättigte Polyesterharzen, Acryl-, Methacryl-und Allylverbindungen, schaffen die verwendeten Kohlenwasserstoffverbindungen und deren Derivate bei einem ausreichend hohen Methylgruppengehalt eine inerte Schutzschicht gegenüber sauerstoffhaltigen Atmosphären. Dadurch wird das Inhibieren der Reaktion durch Sauerstoff unterbunden und es entstehen klebfreie Oberflächen. Die Zusatmengen können dabei unter 10 % - bezogen auf den Gehalt an reaktiven Verbindungen- liegen. Als Schutzmittel werden sie gleichzeitig in die Kunststoffmatrix integriert. Diese Tatsache ist besonders für strahlenhärtbare Erzeugnisse von aktuellem Interesse, weil dadurch beim Harten auf eine Schutzgasatmosphäre und/oder den Zusatz von Synergisten verzichtet werden kann.

Eine weitere besondere Anwendungsform vorliegender Erfindung ist die Herstellung von selbsttragenden Filmen und Folien mit spezifischen hydrophoben und/oder abhäsiven Eigenschaften aus den erfindungsgemäß verwendeten Massen. Mit ihnen lassen sich hydrophobe und/oder schmutzabweisende Folien fr das Bauwesen, abhäsive Trennfolien zum-Abdecken und Verpacken von klebrigen Massen und Substraten, wie Haftkleber, Klebefilme und -bänder, erzeugen, die neben verbesserten Eigenschaften, wirtschaftlicher und umweltfreundlicher sind.

Die Erfindung läßt sich auch auf das Imprägnieren und hydrophobe Ausrüsten von Naturstoffen, wie Cellulosefasern und Holzspäne anwenden. So lassen sich, wie überraschenderweise gefunden wurde, auch die Holzspäne für die Spanplattenherstellung hydrophob ausrüsten. Diese Funktion erfüllen im Gegensatz hierzu die gesättigten Isoparaffine nicht (siehe Adhäsion Heft 4/1983). Es ist daher anzunehmen. daß die erfindungsgemaß verwendeten Verbindungen der allgemeinen Formeln I bis III an den Abbindereaktionen der Polykondensations-oder Polyadditionsleime beteiligt sind.

Die Erfindung sei durch die folgenden Beispiele näher erläutert.

Die in den Beispielen verwendeten Mengenangaben und -verhältnisse beziehen ich im allgemeinen auf das Gewicht (Gewichtsteile = GT).

Folgende erfindungsgemaß ausgewählten Monomere, Oligomere und Polymere gelangten zum Einsatz:

Monomer 1: 2.3-Dimethylbuten-2

Monomer 2: 2,3-Epoxy-2,3-dimethylbutan

Oligomer 1: Oligomerengemisch aus 2,3-Dimethylbuten-2 (40%), 3-Methylbuten-2 (45%), Buten-2 (15%) und 2-Methylpropen-1 (5%)

| | |
|---|---|
| C-Zahl: | $C_{14}-C_{20}$ |
| Kettenverzweigung: | 3,5 bis 4,0 Mol Methylgruppen/ Molekül obiger Monomere |
| Dichte in g/cm$^3$: | 0,817 |
| Viskosität/50°C: | 3,5 mm$^2$/s |
| Flammpunkt: | 112°C |
| Siedeverlauf: | Siedebeginn: 255°C. |
| Siedeende: | 280°C |
| Doppelbindungen: | 2 |

Polymer 1: Niedermolekulares Polymer aus dem Oligomer 1 hergestellt

| | |
|---|---|
| C-Zahl: | 80% $C_{60-65}$<br>20% $C_{30}$ |
| Kettenverzweigung: | 2,0 Mol Methylgruppen pro C-C-Einheit |
| Viskosität: | 2050 mPa.s |
| Dichte/ 15°C: | 0,892 |
| Flammpunkt: | 203°C |
| Doppelbindungen: | 1 |

**Beispiel 1 und 2**

Folgende freiradikalisch härtenden Beschichtungsmassen wurden hergestellt:

| | Beispiel 1 | Beispiel 2 | Vergleich |
|---|---|---|---|
| Bisphenol A-dimethacrylat | 70 | 70 | 70 |
| Oligomergemisch 1 (Verdünner) | 30 | 5 | - |
| Methylmethacrylat (Verdünner) | - | 25 | 30 |
| N,N-Diäthylanilin | 1 | 1 | 1 |
| Benzoylperoxid, 50%ig inWeichmacher | 4 | 4 | 4 |

Nach dem Untermischen des Realktionsinitiators Benzoylperoxid wurden mit den 3 Beschichtungsmassen sandgestrahlte Stahlbleche in einer Schichtstärke von ca. 100 µm beschichtet. Nach ca. 10 Minuten gelierten alle 3 Beschichtungsmassen und waren nach weiteren 20 Minuten durchgehärtet. Während die Beschichtungsmassen nach Beispiel 1 und 2 keine klebrige und schleifbare Oberfläche zeigten, war die Oberfläche aus der vergleichenden Beschichtungsmasse klebrig. Hierbei wurde die Reaktion durch den Luftsauerstoff an der Oberfläche inhibiert.

**Beispiel 3**

Es wurde eine Spachtelmasse aus einem hochreaktiven, ungesättigten Polyester (Viskosität ca. 1000 mPa.s, Styrolgehalt ca. 35%) aminovorbeschleunigtes, hochreaktives, ungesättigtes Polyesterharz. bestehend aus 35 Gew.-% Phthalsäureanhydrid, 24 Gew.-% Maleinsäureanhydrid, 26 Gew.-% Diethylenglykol, 15 Gew.-% Ethylenglykol) hergestellt und 3% Polymer 1 zugesetzt. Zum Vergleich wurde dieselbe Spachtelmasse anstelle von Polymer 1 mit 5% Paraffin versetzt. Nach Zugabe von 4 Gew.-% Benzoylperoxid- 50%ig in Weichmacher, härteten diese Massen innerhalb von 10 Minuten aus. Während die Masse mit dem Paraffinzusatz an der Oberfläche klebrig war, hatte die Masse mit dem erfindungsgemaß verwendeten Polymer klebrige Oberfläche. Beide Massen wurden anschließend 4 Wochen in vollentsalztem Wasser gelagert. Die Masse mit dem erfindungsgemäßen Zusatz zeigte keine Veränderung, während die mit dem Paraffinzusatz matt war und Risse an der Oberfläche hatte.

**Beispiele 4 und 5**

Folgende kondensationsvernetzende Silikontrennmittel wurden hergestellt und damit Beschichtungen durchgeführt:

| | Beispiele 4 | Beispiele 5 | Vergleich |
|---|---|---|---|
| α-ω-Dihydroxypolydimethylsiloxan | 10 | 5 | 10 |
| Oligomer 1 (reaktiverVerdünner) | 90 | 95 | - |
| Toluol (inerter Verdünner) | - | - | 90 |
| Methyldiethoxysilan (Vernetzer) | 10 | 10 | 10 |
| Dibutylzinndilaurat (Katalysator) | 5 | 5 | 5 |
| Viskosität/20°C mPa.s ca. | 400 | 250 | 500 |
| Substrat: satiniertes Papier, 67 g/m$^2$ | | | |
| Auftragsgewicht (naß) g/m$^2$ | 2-3 | 2-3 | 40 |
| Auftragsgewicht (trocken) g/m$^2$ | 2-3 | 2-3 | 2 |
| Härtungszeiten 80°C sec. | 20 | 20 | keine Vernetzung |
| Härtungszeiten 120°C sec | 5 | 5 | 15 |
| Trennkräfte*) FINAT No. 10 mN/cm | 80 | 87 | 80 |
| Restklebrigkeit FINAT No. 11% | 97 | 90 | 95 |

*) Prüfklebestreifen = Acrylatklebstoff

Diese Beispiele demonstrieren, daß beim erfindungsgemaßen Zusatz von Oligomer 1 die Härtungszeiten und die Härtungstemperaturen im Vergleich zu reinen Silikonsystemen niedriger sind, der reaktive Verdünner voll in die Hartungsmatrix integriert und analoge Trennwerte und Restklebrigkeitswerte erzielt werden. Beim reinen Silikon-Trennmittelsystem (Vergleichsversuch) ist der inerte Verdünner zu verdampfen und die Härtungtemperaturen und -zeiten sind höher bzw. länger.

**Beispiele 6 un 7**

Folgende additionsvernetzende Silikontrennmittel wurden hergestellt und damit Beschichtungen durchgeführt:

| | Beispiele 6 | Beispiele 7 | Vergleich |
|---|---|---|---|
| Vinylpolydimethylpolysiloxan | | | |
| Viskosität 5.000 mPa.s | 50 | 70 | 100 |
| Oligomer 1 (reaktiverVerdünner) | 50 | 30 | - |
| Vernetzer (Wasserstoffsiloxan) | 3 | 3 | 4 |
| Katalysator (Hexachlorplatin(IV)säure) | 0,4 | 0,4 | 0,4 |
| Viskosität/20°C mPa.s | 300 | 400 | 500 |
| Substrat: satiniertes Papier, 67 g/$m^2$ | | | |
| Auftragsgewicht g/$m^2$ | 2-3 | 2-3 | 2-3 |
| Härtungszeiten 100°C sec. | 30 | 30 | 60 |
| Härtungszeiten 120°C sec. | 8 | 8 | 15 |
| Trennkräfte FINAT No. 10 mN/cm | 85 | 87 | 87 |
| Restklebrigkeit FINAT No. 11% | 94 | 95 | 95 |

Dieses Beispiel zeigt, daß durch Zusatz eines erfindungsgemaßen reaktiven Verdünners der Polysiloxangehalt bei gleichbleibenden Endeigenschaften reduziert werden kann.

**Beispiel 8**

Folgende Textil-Imprägniermittel wurden hergestellt:

| | Beispiel 8 | Vergleich |
|---|---|---|
| Modifiziertes Methylwasserstoffpolysiloxan | 5 | 5 |
| Oligomer 1 | 95 | - |
| Methylenchlorid | - | 95 |
| Dibutylzinndilaurat, 10%ig (Härter) | 20 | 20 |

Mit diesem Imprägniermittel wurden Leinengewebe behandelt und im Vergleichsbeispiel das Lösungsmittel "Methylenchlorid" durch Verdampfen entfernt. Beide Stoffbahnen wurden dann mit feinen Wassertröpfchen besprüht und dann senkrecht aufgehängt. Während beim Vergleichsbeispiel die feinen Wassertröpfchen stehenblieben, perlten sie auf dem erfindungsgemäß imprägnierten Material ab.

**Beispiel 9**

Ein Methylwasserstoffpolydimethylsiloxan mit einer Viskosität von 150 - 300 $mm^2/s/25°C$ und einem mittleren Molekulargewicht von 2500 wurde als bautenschutzmittel ausgewählt und - wie folgt - applikationsgerecht verdünnt:

| | Beispiel 9 | | | Vergleich | | |
|---|---|---|---|---|---|---|
| | a | b | c | a | b | c |
| Polydimethylsiloxan | 3 | 5 | 10 | 5 | 10 | 12 |
| Oligomer 1 (reaktiver Verdünner) | 97 | 95 | 90 | - | - | - |
| Testbenzin S | - | - | - | 95 | 90 | 88 |
| Katalysator (Dibutylzinndiacetat) | 2 | 2 | 2 | 2 | 2 | 2 |

Mit diesen beiden Bautenschutmitteln wurden Betonblöcke (Bn 150) satt imprägniert. Die Betonblöcke wurden von und nach der 4-wöchigen Wasserlagerung gewogen.
Die Wasseraufnahme betrug:

erfindungsgemäß: a) 0,20% des Trockengewichtes
b) 0,15% des Trockengewichtes
c) 0,11 % des Trockengewichtes

Vergleich: a) 0,90% des Trockengewichtes
b) 0,50% des Trockengewichtes
c) 0.30% des Trockengewichtes

Die Wasseraufnahme des unbehandelten Betonblocks betrug ca. 12% des Trockengewichtes. Da sich das Oligomer 1 als reaktiver Verdünner mit dem Polydimethylsiloxan partiell umsetzt, werden gleichzeitig bei einem reduzierten Einsatz an Bautenschutzmittel nicht nur die Hydrophobie-Eigenschaften verbessert, sondern es treten während der Applikation auch keine umweltbelastenden Lösungsmitteldämpfe im Vergleich zum Testbenzin S auf.

**Beispiel 10**

Es wurden folgende unter Wasserausschluß lagerfähige Organopolysiloxan-Formmassen hergestellt:

| | Beispiel 10 | | | Vergleich | | |
|---|---|---|---|---|---|---|
| | a | b | c | a | b | c |
| α,ω -Dihydroxypolydimethylsiloxan Viskosität: 50.000 mPa.s | 50 | 70 | 90 | 50 | 70 | 90 |
| Oligomer 1 | 50 | 30 | 10 | - | - | - |
| Silikonöl (Polydimethylsiloxan) | - | - | - | 50 | 30 | 10 |
| Kreide | 20 | 20 | 20 | 20 | 20 | 20 |
| Kieselsäure, kolloid, BET 150m$^2$/g | 5 | 5 | 5 | 5 | 5 | 5 |
| Titandioxid | 1 | 1 | 1 | 1 | 1 | 1 |
| Dibutylzinnacetat | 0,8 | 0,8 | 0,8 | 0,7 | 0,7 | 0,7 |
| Di-N-methylbenzamido-methyl-ethoxy-silan | 5,0 | 5,0 | 5,0 | 5,0 | 5,0 | 5,0 |

Die Masse wurde nach den bekannten Verfahren in einem Planetenmischer hergestellt und im Vakuum entgast. Mit den beiden Formenmassen wurden Stahlbleche in einer Schichtstärke von 3 mm beschichtet und 3 Tage im Normklima ausgehärtet. Danach wurden sie mit einem Lack auf Alkydharzbasis (Vor- und Decklack) überstrichen. Die Lackhaltung (Boeing-Test gemaß ASTM D 3359-70) war beim erfindungsgemaßen Zusatz von Oligomer 1 gut, während im Vergleichs beispiel keine Haftung gegeben war.

**Beispiel 11**

100 GT eines Silikonacrylates* (Viskosität 2.000 mPa.s/25 °C) wurde mit 50 GT Acrylsäure-2 -hydroxy-1,1,2 -trimethylpropylester und 10 GT Acrylamid verdünnt. Anschließend wurde diese Menge geteilt und damit strahlen- und photochemische Härtungen mit den damit beschichteten Substraten durchgeführt. Der photochemisch härtbaren Masse wurden 5% Diethoxyacetophenon. 2% Benzophenon und 2% eines-Amin-Synergisten zugesetzt. Folgende Substrate wurden beschichtet:

| Substrate | Auftragsstärke | ES-Dosis | UV-Härtung Lampe 80 W/cm |
|---|---|---|---|
| | µm | (Mrd) kj/kg | Sekunden |
| Papier, 67 g/m² | 2 | 30(3) | 5 |
| Weich-PVC-Folie, 100 µm | 1 | 20(2) | - |
| OPP-Folie, 40 µm | 1 | 10(1) | - |

Stahlblech, gesandstrahlt 30 5 15

Alle ausgehärteten Beschichtungen zeigten gute hydrophobe und abhäsive Eigenschaften. Ihre Werte waren nicht schlechter als beim reinen Silikonacrylat.

* Das Silikonacrylat ist eine hexafunktionelle Silikonverbindung der Formel:

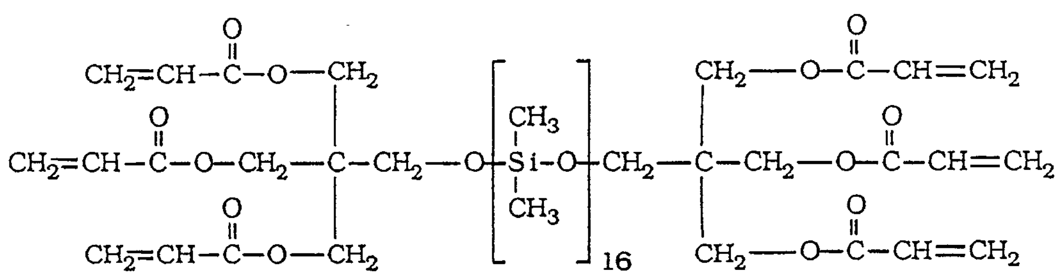

und enthält zusätzlich 10% eines Wasserstoffsiloxanvernetzers der Formel:

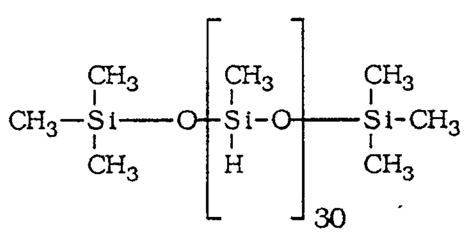

## Ansprüche

1. Verwendung einer hydrophoben und/oder abhäsiven Masse auf anorganischer, metallorganischer und/oder organischer Grundlage mit einem Gehalt von 0,1 bis 99,9 Gew.-%, bezogen auf die Masse an einer monomeren, oligomeren und/oder polymeren methylgruppenreichen Kohlenwasserstoffverbindung und/oder deren Derivaten der allgemeinen Formeln I, II und/oder III

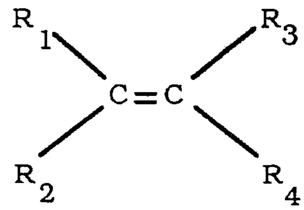

(I)

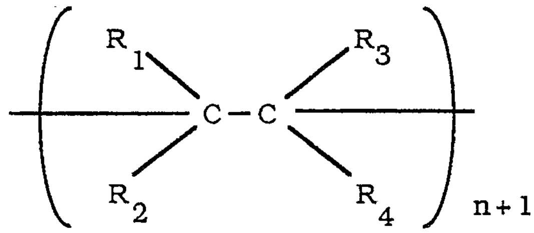

(II)

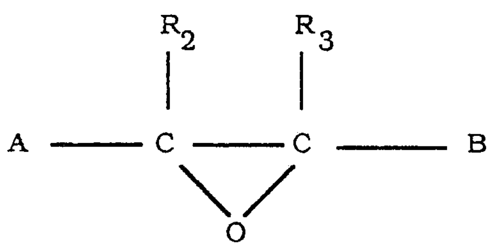

(III)

worin

$R_1$, $R_2$, $R_3$ und $R_4$ Wasserstoffatome, $CH_3$-Gruppen und/oder $C_2H_5$-Gruppen,

A und B Wasserstoffatome, $CH_3$-Gruppen und/oder $C_2H_5$-Gruppen und/oder Reste der allgemeinen Formel (II) und

n eine ganze Zahl mit einem Wert zwischen 0 und 20.000.000

mit der Maßgabe bedeuten, daß der Methylgruppengehalt mindestens 3,0 bis 4,0 pro Monomer oder Monomereinheit beträgt, zum hydrophoben und/oder abhäsiven Ausrüsten von anorganischen, metallorganischen und/oder organischen Stoffen, zur Herstellung von bahnförmigem, flächigem hydrophobem und/oder abhäsivem Film- und Folienmatertal, als Verdünnungsmittel und/oder Weichmachungsmittel in metallorganischen und/oder organischen Massen sowie zur Ausbildung einer inerten Schutzschicht bei radikalischen, strahlen- und photochemischen Härtungs- und Vernetzungsreaktionen.

2. Verwendung nach Anspruch 1, **dadurch gekennzeichnet,** daß als Derivate der methylgruppenreichen Kohlenwasserstoffverbindungen der allgemeinen Formeln I, II und/oder III copolymere Derivate, welche durch Polymerisation mit Comonomeren mit mindestens einer reaktionsfähigen C-C-Doppelbindung und/oder C-C-Dreifachbindung, durch Polyaddition mit aktive Wasserstoffatome tragenden Verbindungen und/oder durch Polykondensation mit polykondensationsfähige Hydroxylgruppen tragenden Verbindungen, organischen Siliciumverbindungen und/oder anorganischen, hydraulisch abbindenden Verbindungen erhalten worden sind, eingesetzt werden.

3. Verwendung nach Anspruch 2, **dadurch gekennzeichnet,** daß

a) als copolymerisierbare Comonomere Alkene, Cycloalkene, Arylalkene, Polyene, Allene, Arene, Arine, und noch bevorzugter allyl-, vinyl-, acryl- und/oder methacrylgruppenhaltige Verbindungen,

b)als aktive Wasserstoffatome tragende Verbindungen Amine, Amide, Amidoamine, Imine, Imide, ein-oder mehrbasig gesättigte und/oder ungesättigte Säuren bzw. deren Anhydride und/oder Siliciumwasserstoffverbindungen,

c) als polykondensationsfähige, Hydroxylgruppen tragende Verbindungen einodermehrwertige Alkohole, Mono-, Di-oder Polycarbonsäuren und deren Anhydride und/oder aliphatische oder aromatische Methylolverbindungen,

d) als organische Siliciumverbindungen unverzweigte,verzweigte und/oder cyclische Silane, Silanole, Polysilane, Polyorganosiloxane, Polysilazane, Polysilthian, Polysilalkenyle, Polysilarylene, Polysilalkensiloxane, Polysiarylensiloxane, Polysilalkylensilane und/oder Polysilarylensilane mit mindestens einer siliciumund/oder organofunktionellen Gruppe und

e)als anorganische, hydraulisch abbindende Verbindungen Zemente oder Silikate eingesetzt werden.

## Claims

1. The use of a hydrophobic and/or abhesive composition on an inorganic, organometallic and/or organic basis having a content of 0.1 to 99.9% by weight, based on the composition, of a monomeric, oligomeric and/or polymeric hydrocarbon compound rich in methylgroups and/or derivatives thereof of the general formulae (I), (II) and/or (III)

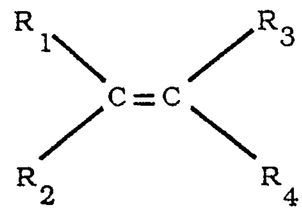

(I)

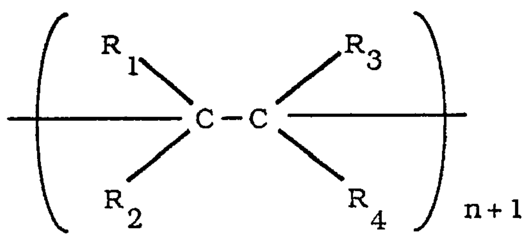

(II)

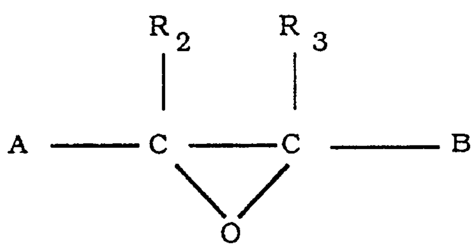

(III)

wherein $R_1$, $R_2$, $R_3$ and R are hydrogen, $CH_3$-groups and/or $C_2H_5$-groups,
A and B are hydrogen, $CH_3$-groups and/or $C_2H_5$-groups and/or residues of the general formula (II) and
n is an integer having a value between 0 and 20,000,000
with the proviso that the methyl group content is at least 3.0 to 4.0 per monomer or monomer unit for rendering hydrophobic and/or abhesive of inorganic, organometallic and/or organic substances, for the manufacture of hydrophobic and/or abhesive flat and sheet-like film and foil material, as diluent and/or plastifier in organometallic and/or organic compositions and for the manufacture of an inert protective layer in radical, radiation and photochemically induced hardening and crosslinking reactions.

2. The use according to claim 1, **characterized in that** as derivatives of said hydrocarbon compounds rich in methyl groups of the general formulae (I),(II) and/or (III) copolymeric dervatives, which have been obtained by polymerization with comonomers having at least one reactive C-C-double bond and/or C-C-triple bond by polyaddition with compounds having active hydrogen atoms and/or by polycondensation with polycondensable compounds having hydroxy groups, organic silicon compounds and/or inorganic hydraulically setting compounds, are used.

3. The use according to claim 1, **characterized in that**
a) as copolymeric comonomers alkenes, cycloalkenes, arylalkenes, polyenes, allenes, arenes, arines and preferably allyl, vinyl, acryl and/or methacryl group containing compounds;
b) as active hydrogen atoms carrying compounds amines, amides, amidoamines, imines, imides,

mono- or polybasic saturated and/or unsaturated acids and the anhydrides thereof respectively, and/or silicon hydrogen compounds;

c) as polycondensable hydroxy groups carrying compounds mono or polyvalent alcohols, mono-, di- or polycarboxylic acids and the anhydrides thereof and/or aliphatic or aromatic methylol compounds,

d) as organic silicon compounds unbranched, branched and/or cyclic silanes, silanoles, polysilanes, polyorganosiloxanes, polysilazanes, polysilthian, polysilalkenyls, polysilarylenes, polysilalkensiloxanes, polysilarylene siloxanes, polysilalkylenesilanes and/or polysilarylene silanes having at least one silicon and/or organofunctional group; and

e) as inorganic hydraulically setting compounds cements or silicate;s are used.

## Revendications

1. Utilisation d'une matière hydrophobe et/ou antiadhésive, à base inorganique, organométallique et/ou organique, ayant une teneur de 0,1 à 99,9 % en poids par rapport à la matière, en un composé hydrocarboné monomère, oligomère et/ou polymère, riche en groupes méthyle, et/ou en ses dérivés de formule générale I, II et/ou III

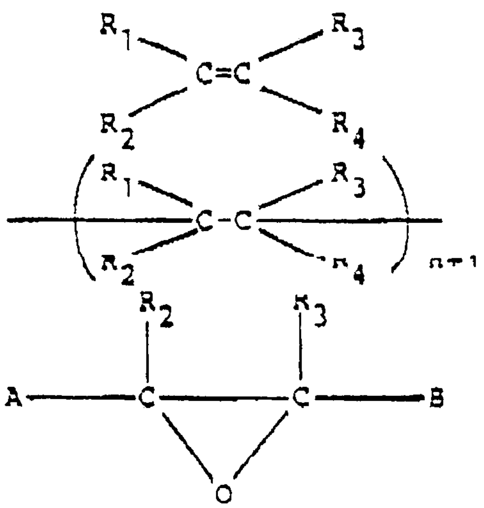

(I)

(II)

(III)

dans lesquelles

$R_1$, $R_2$, $R_3$ et $R_4$ représentent des atomes d'hydrogène ou des groupes $CH_3$ et/ou des groupes $C_2H_5$,

A et B représentent des atoms d'hydrogène ou des groupes $CH_3$ et/ou des groupes $C_2H_5$ et/ou des radicaux de formule générale (II), et

n représents un nombre entier ayant une valeur comprise entre 0 et 20 000 000,

étant entendu que la teneur en groupes méthyle est d'au moins 3,0 à 4,0 par monomère ou motif de monomère, pour le traitement hydrophobe et/ou antiadhésif de matières inorganiques, organométalliques et/ou organiques, pour la fabrication de matériau mince de pellicules et de feuilles, en forme de bande continue, hydrophobe et/ou antiadhésif, en tant que diluent et/ou plastifiant dans des matières organométalliques et/ou organiques, ainsi que pour la formation d'une couche protectrice inerte dans des réactions de durcissememt et de réticulation radicalaires, photochimiques et radio-induites.

2. Utilisation selon la revendication 1, caractérisée en ce que l'on utilise en tant que dérivés des composés hydrocarbonés de formules générales I, II et/ou III, riches en groupes méthyle, des dérivés copolymères qui ont été obtenus par polymérisation avec des comonomères comportant au moins une double liaison C-C réactive et/ou une triple liaison C-C réactive, par polyaddition avec des composés portant des atoms d'hydrogène actif et/ou par polycondensation avec des composés portant des groupes hydroxy polycondensables, des composés organiques de silicium et/ou des composés minéraux à prise hydraulique.

3. Utilisation selon la revendication 2, caractérisée en ce que l'on utilise

a) en tant que comonomères copolymérisables, des alcènes, cycloalcènes, arylalcènes, polyènes, allènes, arènes, arynes, et des composés contenant des groupes allyle, vinyle, acryle et/ou méthacryle encore préférés,

b) en tant que composés portant des atomes d'hydrogène actif, des amines, amides, amidoamines, imines, imides, des mono- ou polyacides saturés et/ou insaturés ou leurs anhydrides et/ou des composés à base d` hydrogène silicié,

c) en tant que composés portant des groupes hydroxy polycondensables, des monoalcools ou polyols, des acides monodi-ou polycarboxyliques et leurs anhydrides et/ou des composés méthlol aliphatiques ou aromatiques,

d) en tant que composés organiques de silicium, des silane, silanols, polysilanes, polyorganosiloxanes, polysilazanes, polysilathianes, polysilalcényles, polysilarylènes, polysilalcènesiloxanes, polysilarylènesiloxanes, polysilalcylènesilanes et/ou des polysilarylènesilane comportant au moins un groupe à fonction organique et/ou silicium, non ramifiés, ramifiés et/ou cycliques, et

e) en tant que composés minéraux à prise hydraulique, des ciments ou des silicates.